# EUROPÄISCHE PATENTSCHRIFT

(11) **EP 0 853 520 B1**
(45) Veröffentlichungstag und Bekanntmachung des Hinweises auf die Patenterteilung: **05.02.2003**
(21) Anmeldenummer: 96932458.1
(22) Anmeldetag: 04.10.1996
(51) Int. Cl.: B23B 31/103

(54) **HANDWERKZEUGMASCHINE MIT WERKZEUGHALTER UND ZUGEHÖRIGES WERKZEUG**
MANUAL MACHINE TOOL WITH TOOL HOLDER AND APPROPRIATE TOOL
MACHINE-OUTIL MANUELLE AVEC PORTE-OUTIL ET OUTIL ASSOCIE

(30) Priorität: 06.10.1995 DE 19537117; 21.08.1996 DE 19633677
(43) Veröffentlichungstag der Anmeldung: 22.07.1998
(73) Patentinhaber: ROBERT BOSCH GMBH, 70442 Stuttgart (DE)
(72) Erfinder: KIRN, Manfred, D-70567 Stuttgart (DE); KRAENZLER, Ernst, D-70771 Leinfelden-Echterdingen (DE); KLINGENSTEIN, Klaus, D-70771 Leinfelden-Echterdingen (DE); DREHER, Ernst, D-72760 Reutlingen (DE); HAHN, Gerd, D-70771 Leinfelden-Echterdingen (DE); MATZO, David, D-70771 Leinfelden-Echterdingen (DE); ULLRICH, Joerg, D-72135 Dettenhausen (DE); DEHDE, Joerg, D-71144 Steinenbronn (DE); GARATWA, Karl, D-72768 Reutlingen (DE); SCHADOW, Joachim, D-70565 Stuttgart (DE); HERMES, Christian, D-71093 Weil im Schoenbuch (DE); MOESSNER, Joerg, D-75217 Birkenfeld (DE)
(74) Vertreter: Daub, Nicole
(86) Internationale Anmeldenummer: DE9601912
(87) Internationale Veröffentlichungsnummer: WO97013607

(56) Entgegenhaltungen:
- EP-A- 0 525 560
- EP-A- 0 526 783
- CH-A- 664 516
- US-A- 1 422 058
- US-A- 1 929 869

## Beschreibung

### Stand der Technik

Die Erfindung geht aus von einer Handwerkzeugmaschine nach dem Oberbegriff des Anspruchs 1 bzw. von einem zugehörigen Werkzeug nach dem Oberbegriff des Anspruchs 14 und wie aus US-A-1 929 869 bekannt. Es ist schon eine Handwerkzeugmaschine bekannt (DE 25 51 125 C2), die einen Werkzeughalter zur Aufnahme eines Werkzeugs aufweist. Die Drehmitnahme des Werkzeugs erfolgt über Drehmitnahmeleisten am Werkzeughalter, die in entsprechende Drehmitnahmenuten im Werkzeugschaft eingreifen. In axialer Richtung wird das Werkzeug von lösbaren Verriegelungskörpern des Werkzeughalters gesichert, die in korrespondierende, axial beidseitig geschlossene Ausnehmungen im Werkzeugschaft eingreifen. Die Mittel für die Drehmitnahme des Werkzeugs und die Mittel für die axiale Festlegung des Werkzeugs sind dabei axial im Bereich der Aufnahmeöffnung angeordnet. Dies hat zwar den Vorteil, daß sich ein axial relativ kurz bauender Werkzeughalter und ein entsprechend kurzer Werkzeugschaft realisieren läßt. Allerdings muß wegen der axialen Überlagerung der einzelnen Funktionsbereiche aus Herstellungsgründen bei den Eigenschaften des Werkzeugschaftes ein Kompromiß eingegangen werden. Die Forderung nach einem robust und verschleißfest ausgeführten und daher zu härtenden Drehmitnahmebereich steht der Ausführung eines eng tolerierten und daher sehr formgenau herzustellenden Führungsbereichs zur Erzielung guter Rundlaufeigenschaften entgegen.

Weiterhin sind Backenfutter zur Halterung eines Werkzeugs bekannt. Zur Erzielung guter Rundlaufeigenschaften müssen die Futterbacken das Werkzeug unabhängig von dessen Schaftdurchmesser stets zentrisch zur Bohrspindel aufnehmen, was einen hohen Fertigungsaufwand erfordert. Auch gestaltet sich das Einsetzen eines Werkzeugs in ein Bohrfutter relativ aufwendig, da das Bohrfutter zunächst geöffnet werden muß und die Futterbacken anschließend mit dem Werkzeug verklemmt werden müssen. Eine automatische Einsteckverriegelung ist nicht möglich.

Aus der US 1,929,869 ist ein Werkzeughalter zum Schnellwechsel eines Werkzeuges bekannt, der als Führungsmittel zur axialen Führung eines einzusetzenden Werkzeugschafts eine Aufnahme aufweist, in die ein Führungs-Schaftabschnitt des Werkzeugs axial einsetzbar ist, und der mit Mitteln zur Drehmitnahme des Werkzeugs und mit Haltemitteln zur axialen Sicherung des Werkzeugs versehen ist. Die Haltemittel sind dabei den Führungsmitteln axial vorgelagert. Nachteilig an dem bekannten Werkzeughalter ist, daß der Führungs-Schaftabschnitt einen größeren bzw. allenfalls den gleichen Durchmesser wie ein Durchmesser eines Halteabschnitts des Werkzeugschafts im Bereich der Haltemittel hat. Dies führt im praktischen Betrieb dazu, daß der durch den Halteabschnitt hindurch in den Werkzeughalter einzusetzende Werkzeugschaft beim Einstecken sehr leicht beschädigt werden kann, so daß sich schon nach relativ kurzer Zeit schlechtere Führungseigenschaften ergeben.

### Vorteile der Erfindung

Der erfindungsgemäße Werkzeughalter mit den kennzeichnenden Merkmalen des Anspruchs 1 bzw. das erfindungsgemäße Werkzeug mit den kennzeichnenden Merkmalen des Anspruchs 14 hat demgegenüber den Vorteil, daß eine hohe Führungsgenauigkeit zwischen Werkzeughalter und Werkzeug bei einfachem Aufbau des Werkzeughalters und einfach und kostengünstig zu fertigendem Werkzeug ermöglicht wird. Darüber hinaus gestattet der Aufbau des Werkzeughalters das Vorsehen einer automatischen Axial-Verriegelung beim Einsetzen des Werkzeugs in den Werkzeughalter.

Durch die in den Unteransprüchen aufgeführten Maßnahmen sind vorteilhafte Weiterbildungen der im Anspruch 1 angegebenen Handwerkzeugmaschine bzw. des im Anspruch 14 angegebenen Werkzeugs möglich.

### Zeichnung

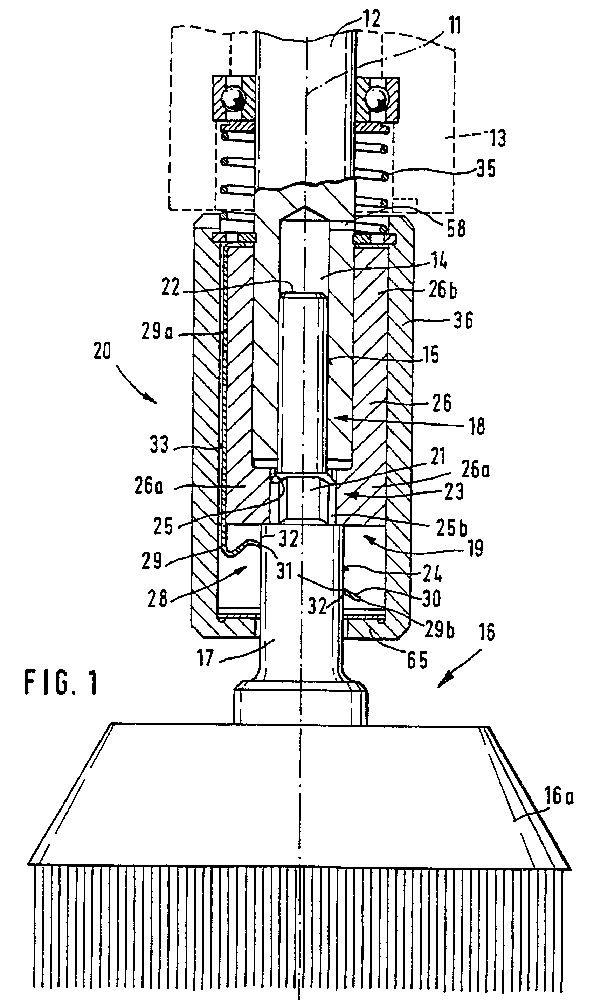

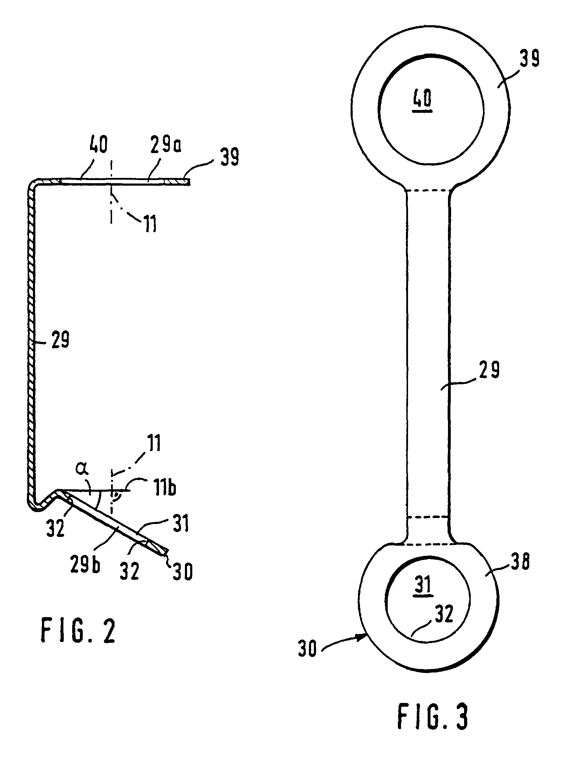

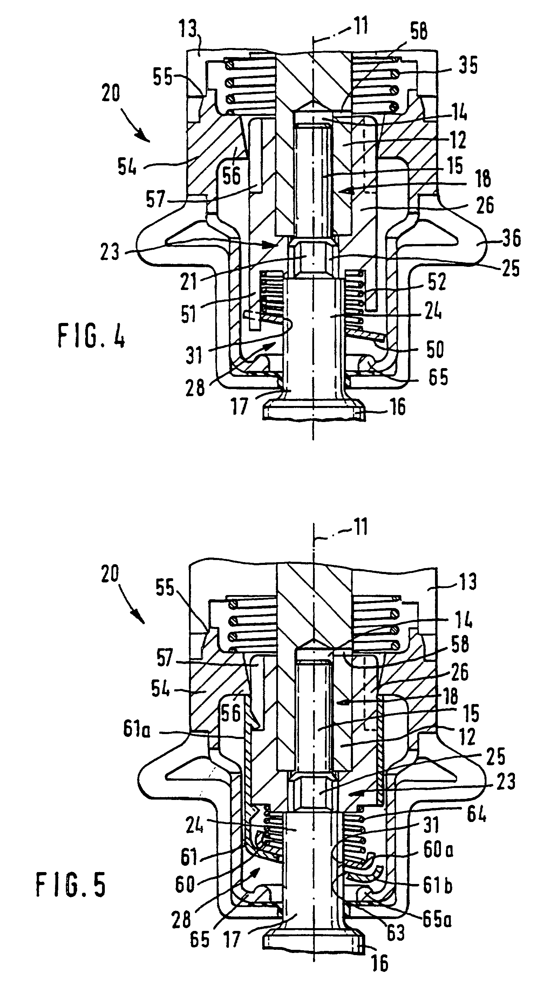

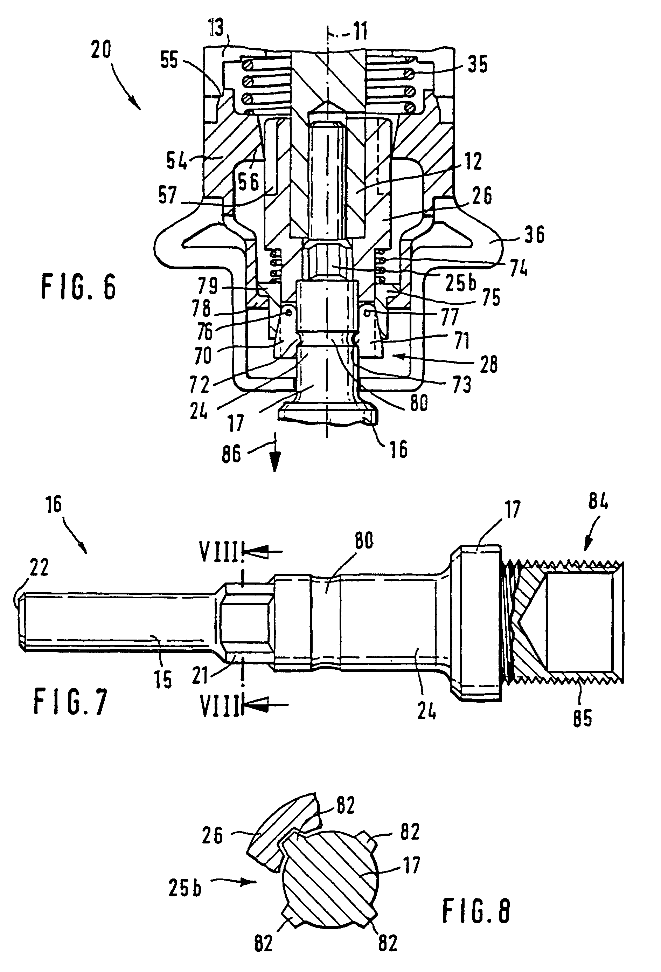

Fünf Ausführungsbeispiele der Erfindung sind in der Zeichnung dargestellt und in der nachfolgenden Beschreibung näher erläutert. Es zeigen Figur 1 einen Längsschnitt durch einen Werkzeughalter einer Handwerkzeugmaschine mit darin eingesetztem Werkzeug, Figur 2 einen Längsschnitt durch ein Federblech des Werkzeughalters, Figur 3 eine Ansicht des Federblechs, Figur 4 einen Längsschnitt durch einen Werkzeughalter gemäß einem zweiten Ausführungsbeispiel, Figur 5 einen Längsschnitt durch einen Werkzeughalter gemäß einem dritten Ausführungsbeispiel, Figur 6 einen Längsschnitt durch einen Werkzeughalter gemäß einem vierten Ausführungsbeispiel, Figur 7 einen Teilschnitt durch ein Werkzeug, Figur 8 einen Querschnitt durch das Werkzeug gemäß Linie VIII-VIII in Figur 7, sowie die Figuren 9 und 10 jeweils einen Längsschnitt durch einen Werkzeughalter gemäß einem fünften Ausführungsbeispiel.

### Beschreibung der Ausführungsbeispiele

In Figur 1 ist der werkzeugseitige Teil einer Handwerkzeugmaschine gezeigt. Die Handwerkzeugmaschine weist eine um eine Längsachse 11 drehend antreibbare Spindel 12 auf, die aus einem Gehäuse 13 der Handwerkzeugmaschine hervorragt. In der Spindel 12 befindet sich konzentrisch eine axiale Führungsbohrung 14, die der Aufnahme und Führung eines zylindrischen Schaftabschnitts 15 eines Werkzeugs 16 dient. Das Werkzeug 16 ist im Beispielfall als Bürste 16a ausgebildet. Es kann sich dabei aber auch um ein anderes Werkzeug mit drehender Arbeitsbewegung handeln, wie z. B. um ein Bohr-, Schraub- oder Schleifwerkzeug.

Die Führungsbohrung 14 bildet ein Führungsmittel 18 zur axialen Führung des Schaftabschnitts 15 und ist Teil einer Aufnahme 19 eines Werkzeughalters 20 zur Halterung des Werkzeugs 16. Das Werkzeug 16 ist mit einem Werkzeugschaft 17 versehen, der in die Aufnahme 19 einsetzbar ist. An einem einsteckseitigen Ende 22 des Werkzeugs 16 ist der Schaftabschnitt 15 ausgebildet. Werkzeugseitig schließt sich axial an die Führungsbohrung 14 ein Bereich 21 zur Drehmitnahme des Werkzeugs 16 an, in dem entsprechende Mittel 23 zur Drehmitnahme ausgebildet sind. Auf der Spindel 12 sitzt eine Hülse 26, die mit einem hinteren Abschnitt 26b auf die Spindel 12 aufgesetzt ist und mit dieser drehfest verbunden ist. Die Hülse 26 ragt werkzeugseitig über die Spindel 12 hinaus, wobei am über die Spindel 12 hinausragenden Teil 26a der Hülse 26 innen ein Drehmitnahmeprofil 25, z.B. eine Verzahnung oder ein Mehrkantprofil, ausgebildet ist, das mit einem entsprechenden Gegen-Profil 25b am Werkzeugschaft 17 formschlüssig zusammenwirkt.

An den Drehmitnahmebereich 21 schließt sich axial ein Halteabschnitt 24 zur axialen Sicherung des Werkzeugs 16 gegen Herausfallen bzw. unbeabsichtigtes Herausziehen aus der Führungsbohrung 14 an. In diesem Halteabschnitt 24 wirkt als Haltemittel 28 ein Federblech 29 mit einem abgewinkelten, schräg zur Längsachse 11 liegenden freien Ende 29b, das ein Klemmteil 30 bildet. Das Klemmteil 30 hat eine Öffnung 31, die von einem zylindrischen Abschnitt des Werkzeugschafts 17 durchragt wird. Das Klemmteil 30 ist gegenüber der Längsachse 11, die gleichzeitig die Drehachse des Werkzeugs 16 bildet, verschwenkbar. Auf diese Weise kann der wirksame Querschnitt der Öffnung 31 verändert werden.

Das Federblech 29 ist mit einem Ende 29a drehfest und axial fest mit der Hülse 26 verbunden. Die drehfeste Festlegung des Federblechs 29 erfolgt dabei durch Eingriff in eine Längsnut 33 in der Hülse 26. Das abgewinkelte Klemmteil 30 des Federblechs 29 ist in Richtung zur Längsachse 11 federnd vorgespannt, so daß sich der Halteabschnitt 24 des Werkzeugschafts 17 mit einem Rand 32 der Öffnung 31 verklemmt. Wird das Werkzeug 16 in der Klemmstellung geringfügig aus der Aufnahmeöffnung 14 gezogen, wird die Klemmkraft noch zusätzlich verstärkt, d.h. es liegt Selbsthemmung vor.

Eine Betätigungshülse 36 umgreift den Werkzeughalter 20 und ist gegenüber der Spindel 12 axial verschiebbar gelagert. Durch Zurückschieben der mittels einer Feder 35 in Richtung auf das Werkzeug 16 vorgespannten Betätigungshülse 36 bewegt sich die Betätigungshülse 36 mit ihrer vorderen Stirnseite 65 gegen das Klemmteil 30 und drückt es federnd in eine mehr senkrecht zur Längsachse 11 liegende Position, wobei dann die Öffnung 31 einen gegenüber dem Halteabschnitt 24 größeren wirksamen Querschnitt hat, so daß die Klemmung zwischen Klemmteil 30 und Werkzeug 16 aufgehoben wird. Der Werkzeugschaft 17 ist dann aus der Aufnahme 19 herausnehmbar.

In den Figuren 2 und 3 ist das Federblech 29 dargestellt. Wie aus der abgewickelten Darstellung in Figur 3 hervorgeht, sind am Federblech 29 endseitig jeweils Ronden 38, 39 angeformt. Eine erste Ronde 38 bildet dabei den Klemmteil 30 mit Öffnung 31, eine zweite Ronde 39 ist am hinteren Ende 29a des Federblechs 29 senkrecht zur Längsachse 11 abgewinkelt (Figur 2) und dient der axialen Festlegung des Federblechs 29 am Werkzeughalter 20. In dieser Ronde 39 ist ein Loch 40 zum Durchgriff der Spindel 12 vorgesehen.

Die Öffnung 31 ist im Beispielfall zylindrisch ausgeführt mit einem gegenüber dem Radius des Werkzeugschafts 17 im Halteabschnitt 24 größeren Radius. Die Öffnung 31 kann jedoch auch ellipsenförmig ausgebildet sein. Der für die Klemmung zwischen Klemmteil 30 und Werkzeug 16 maßgebende Querschnitt der Öffnung 31 verringert sich mit dem Kosinus eines von der Senkrechten 11b zur Längsachse 11 aus gemessenen Schwenkwinkels a des Klemmteils 30. Sobald der quer zur Längsachse 11 gemessene wirksame Querschnitt der Öffnung 31 dem Durchmesser des Halteabschnitts 24 entspricht, tritt Klemmung zwischen dem Rand 32 der Öffnung 31 und dem Werkzeug 16 ein. Ggf. genügt auch eine Klemmung allein auf der rechten Seite des Schaftes 17.

In Figur 4 ist ein zweites Ausführungsbeispiel eines Werkzeughalters 20 dargestellt. Gleiche und gleichwirkende Teile sind, wie auch bei allen weiteren Ausführungsbeispielen, durch die gleichen Bezugszeichen gekennzeichnet. Der wesentliche Unterschied zu dem vorhergehenden ersten Ausführungsbeispiel besteht darin, daß anstatt eines Federblechs mit Klemmteil eine Scheibe 50 vorgesehen ist. Die Scheibe 50 ist mit einem Vorsprung 51 der Hülse 26 einseitig gelenkig verbunden. Die Scheibe 50 hat ebenfalls eine Öffnung 31, deren wirksamer Querschnitt durch Schwenken der Scheibe 50 veränderbar ist.

Eine Druckfeder 52 ist konzentrisch zum Werkzeugschaft 17 zwischen Hülse 26 und Scheibe 50 eingeklemmt. Wegen der gelenkigen Lagerung der Scheibe 50 bewirkt die Druckfeder 52 ein Schwenken der Scheibe 50 hin zum Werkzeug 16 im Sinne einer Verkleinerung des wirksamen Querschnitts der Öffnung 31, wodurch die Scheibe 50 mit dem Halteabschnitt 24 des Werkzeugs 16 verklemmt wird.

Durch eine Axialverschiebung der Betätigungshüle 36 nach hinten wird die Scheibe 50 von der Stirnseite 65 der Betätigungshülse 36 aufgerichtet. Der wirksame Querschnitt der Öffnung 31 erhöht sich dabei, so daß das Werkzeug 16 dann unter Lösen der Klemmung mit der Scheibe 50 axial freigegeben wird. Um ein ungewolltes Lösen des Werkzeugs 16 zu verhindern, muß zunächst ein als Taste 54 ausgebildeter Teil der Betätigungshüse 36 nach radial innen gedrückt werden, so daß eine Sperrfläche 55 freigegeben wird. Erst dann kann die Betätigungshülse 36 axial nach hinten verschoben werden. Die Taste 54 ist ihrerseits nur dann nach innen bewegbar, wenn ein Zahn 56 einer korrespondierenden Nut 57 in der Hülse 26 derart gegenübersteht (linke Schnitthälfte der Figur 5), daß er in die Nut 57 eingreifen kann. In der nicht niedergedrückten Stellung ist die Betätigungshülse 36 axial unverschiebbar, so daß die Betätigungshülse 36 gleichzeitig die Funktion eines Gehäuseteils wahrnimmt.

In Figur 5 ist ein drittes Ausführungsbeispiel eines Werkzeughalters 20 gezeigt. Gegenüber dem zweiten Ausführungsbeispiel nach Figur 4 unterscheidet sich dieser Werkzeughalter 20 nur hinsichtlich der Haltemittel 28, die eine Klemmscheibe 60 umfassen, welche an einem Bügel 61 einseitig anliegt. Der Bügel 61 ist mit einem Teil 61a mit der Hülse 26 drehfest und axial fest verbunden. Er weist ein abgewinkeltes Halteteil 61b auf, das mit einer Durchgangsöffnung 63 für den Halteabschnitt 24 des Werkzeugschafts 17 versehen ist, der die Durchgangsöffnung 63 mit großem Spiel durchragt. Die Klemmscheibe 60 ist mit der Öffnung 31 versehen, die bei einer Schrägstellung der Klemmscheibe 60 die axiale Festlegung des Werkzeugs 16 bewirkt. Die Klemmscheibe 60 wird von einer Feder 64 gegen den Halteteil 61b des Bügels 61 gedrückt. Aufgrund der Schrägstellung des Halteteils 61b gegenüber der Längsachse 11 liegt die Klemmscheibe 60 einseitig am Halteteil 61b an. Ein freies Ende 60a der Klemmscheibe 60 wird dann von der Feder 64 in Richtung auf die Klemmstellung der Klemmscheibe 60 mit dem Werkzeug 16 gedrückt.

Auch hier läßt sich die Klemmung aufheben, wenn die Betätigungshülse 36 nach axial hinten verschoben wird. Dies ist dann möglich, wenn der Zahn 56 durch Eindrücken der Taste 54 in die Nut 57 eingreift und die Sperrfläche 55 gegenüber dem Gehäuse 13 freigegeben ist. Ein Mitnehmerteil 65a an der vorderen Stirnseite 65 der Betätigungshülse 36 bewirkt dann -wie auch bei den vorstehend beschriebenen Ausführungsformen- die Schwenkung der Klemmscheibe 60 im Sinne des Lösens der Klemmung zwischen Klemmscheibe 60 und Werkzeug 16. Durch Zurückschieben der Betätigungshülse 36 kommt das Mitnehmerteil 65a zunächst zur Anlage am Halteteil 61b, das federnd ausgebildet ist. Bei weiterem Zurückschieben der Betätigungshülse 36 stellt sich das Halteteil 61b mehr senkrecht zur Längsachse 11, wobei die durch die Feder 64 gegen das Halteteil 61b gedrückte Klemmscheibe 60 unter Lösen der Klemmung mit dem Werkzeug 16 ebenfalls aufgerichtet wird.

Allen drei Ausführungsbeispielen gemeinsam ist die selbstätige Verriegelung des Werkzeugs 16 beim Einsetzen in den Werkzeughalter 20. Beim Einsetzen des Werkzeugs 16 wird zunächst der Halteabschnitt 15 ein Stück weit in die Führungsbohrung 14 eingesteckt. Anschließend wird das Drehmitnahmeprofil 25 in die richtige Drehlage gebracht, so daß der Werkzeugschaft 17 tiefer in den Werkzeughalter 20 einschiebbar ist. Die Führungsbohrung 14 weist eine Ausgleichsöffnung 58 auf, die einen Druckausgleich beim Einschieben und Herausnehmen des Werkzeugs 16 erleichtert.

Beim weiteren Einsetzen des Werkzeugschafts 17 wird das Klemmglied 30 durch den Schaftabschnitt 24 in Richtung auf seine Lösestellung mit größerem maßgeblichen Querschnitt der Öffnung 31 geschwenkt, so daß die Haltemittel 28 nicht sperren.

Das in Figur 6 dargestellte vierte Ausführungsbeispiel unterscheidet sich von den ersten drei Ausführungsbeispielen im wesentlichen hinsichtlich der Axialsicherung des Werkzeugschafts 17. Zu erkennen ist in Figur 6 die Spindel 12, in die der Schaftabschnitt 15 des Werkzeugs 16 eingesetzt ist. Das werkzeugseitige Ende der Spindel 12 ist von der Hülse 26 umgeben, die mit dem Drehmitnahmeprofil 25b in Form von vier am Umfang gleichmäßig verteilter Nuten versehen ist.

Die axiale Sicherung des Werkzeugs 16 im Werkzeughalter 20 erfolgt mittels Gelenkbacken 70, 71, die jeweils mit einem Haltevorsprung 72, 73 in eine Ringnut 80 im Halteabschnitt 24 des Werkzeugschafts 17 eingreifen. Die als Haltemittel 28 dienenden Gelenkbacken 70, 71 werden dabei von einer Feder 74 über eine axial verschiebbare Konushülse 75 in ihre Verriegelungsstellung gedrängt. Die Gelenkbacken 70, 71 sind an der Hülse 26 um Achsen 76, 77 radial schwenkbar gelagert.

Zur Entriegelung des Werkzeugschafts 16 wird die Betätigungshülse 36 axial entgegen der Kraft der Federn 74 und 35 axial nach hinten verschoben, wobei ein Mitnahmebund 78 an der Betätigungshülse 36 die Konushülse 75 über einen entsprechenden Mitnahmevorsprung 79 mitnimmt und die Gelenkbacken 70, 71 freigibt. Beim anschließenden Herausziehen des Werkzeugschafts 16 in Richtung eines Pfeiles 79 in Figur 6 können die Gelenkbacken 70, 71 nach radial außen verschwenken, so daß der Werkzeugschaft 17 aus dem Werkzeughalter 20 entnehmbar ist.

In Figur 7 ist der Werkzeugschaft 17 des Werkzeugs 16 dargestellt. Erkennbar sind die axial hintereinander angeordneten Bereiche Schaftabschnitt 15 zur axialen Führung, Drehmitnahmebereich 21 und Halteabschnitt 24. Der Führungs-Schaftabschnitt 15 ist ebenso wie der Halteabschnitt 24 zylindrisch geformt. Der Halteabschnitt 24 kann nach dem vierten Ausführungsbeispiel ggf. auch mit Vertiefungen, z.B der Ringnut 80, versehen sein. In Figur 7 ist der Werkzeugschaft 17 als Adapter 84 ausgebildet, an den das Werkzeug 16 aus Figur 1 mittels eines Gewindes 85 lösbar ansetzbar ist.

Das Gegen-Profil 25b des Drehmitnahmebereichs 21 ist in Figur 8 erkennbar. Insgesamt sind vier am Außenumfang verteilte Vorsprünge 82 vorgesehen, die in komplementär dazu in der Hülse 26 ausgebildete Nuten einschiebbar sind.

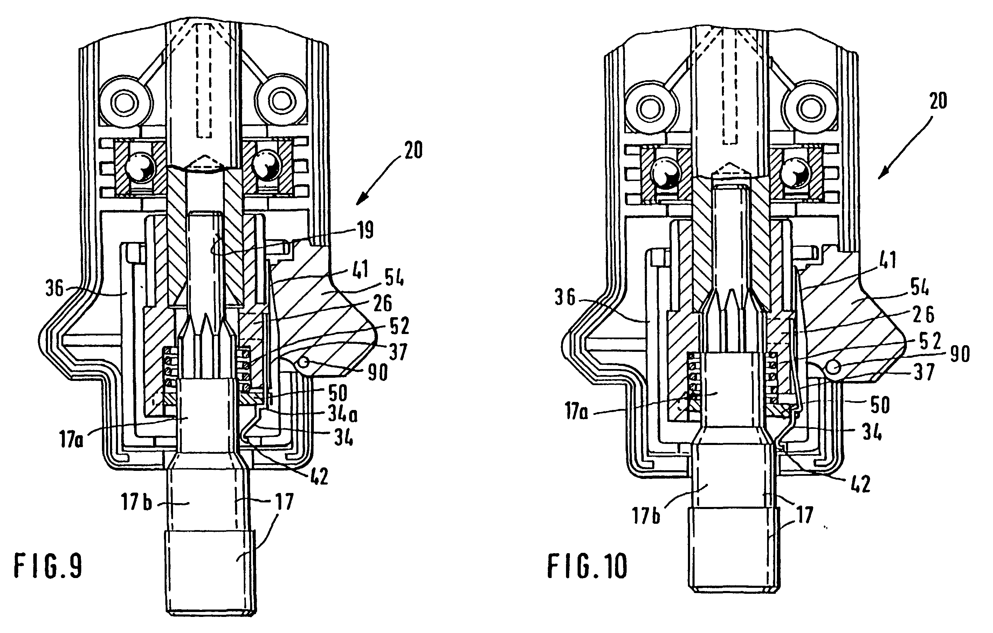

In den Figuren 9 und 10 ist ein fünftes Ausführungsbeispiel der Erfindung dargestellt. Es unterscheidet sich von der in Figur 4 dargestellten Ausführungsform darin, daß die Scheibe 50 mit Hilfe eines Arretiergliedes 34 zum klemmfreien Einsetzen bzw. Herausnehmen des Werkzeugs 16 in ihrer Freigabestellung (siehe Figur 9) arretierbar ist.

Das Arretierglied 34 besteht aus einem Bügel 37, der mit einem Ende 41 an der Hülse 26 des Werkzeughalters 20 befestigt ist. Der Bügel 37 bildet etwa in seiner Mitte eine Abkröpfung 34a, mit der er die Scheibe 50 hintergreift und etwa rechtwinklig zur Längsachse 11 hält. Das freie Ende 42 des Bügels 37 stützt sich am Schaft 17 des in die Aufnahme 19 einzusetzenden Werkzeugs 16 ab.

Der Schaft 17 ist gestuft ausgebildet und weist endseitig einen Abschnitt 17a mit kleinerem Durchmesser und daran anschließend einen Abschnitt 17b mit größerem Durchmesser auf. Solange sich das freie Ende 42 des Bügels 37 beim Einsetzen des Werkzeugs 16 am ersten Abschnitt 17a abstützt, bleibt die Scheibe 50 in ihrer Öffnungsstellung arretiert. Sobald das Werkzeug 16 in die Aufnahme 19 vollständig eingesetzt ist, wird das freie Ende 42 durch den zweiten Abschnitt 17b nach außen versetzt und der Bügel 37 gibt die Scheibe 50 frei (siehe Figur 10). Die Scheibe 50 wird dann durch die Druckfeder 52 schräg gestellt und auf diese Weise mit dem Schaft 17 verklemmt.

Zum Freigeben des Werkzeugs 16 wird die Taste 54 analog zum zweiten Ausführungsbeispiel nach Fig. 4 eingedrückt, so daß sich die Betätigungshülse 36 axial nach hinten verschieben läßt. Die Taste 54 ist dabei über ein Gelenk 90 mit der Betätigungshülse 36 gekoppelt. Über einen in den Figuren 9 und 10 nicht näher dargestellten Vorsprung an der Betätigungshülse kann die Scheibe 50 in ihre Öffnungsstellung aufgerichtet werden. Die Abkröpfung 34a des nach innen vorgespannten Bügels 37 rastet in der Öffnungsstellung vor der Scheibe 50 ein und arretiert diese.

## Patentansprüche

1. Handwerkzeugmaschine mit zugehörigem Werkzeug (16), insbesondere zum Bohren, Schrauben, Bürsten, Schleifen oder dergleichen, mit einem Werkzeughalter (20), der als Führungsmittel (18) zur axialen Führung des Werkzeugs (16) eine Aufnahme (19) aufweist, in die ein Führungs-Schaftabschnitt (15) eines Werkzeugschafts (17) des Werkzeugs (16) axial einsetzbar ist, und der mit Mitteln (23) zur Drehmitnahme des Werkzeugs (16) und mit Haltemitteln (28) zur axialen Sicherung des Werkzeugs (16) versehen ist, wobei die Haltemittel (28) den Führungsmitteln (18) axial vorgelagert sind und zum Zusammenwirken mit einem dem Führungs-Schaftabschnitt (15) axial vorgelagerten Halteabschnitt (24) des Werkzeugschafts (17) ausgebildet sind, **dadurch gekennzeichnet, daß** die Haltemittel (28) einen Aufnahmebereich mit einem größeren Querschnitt als die Führungsmittel (18) aufweisen.

2. Handwerkzeugmaschine nach Anspruch 1, **dadurch gekennzeichnet, daß** die Mittel (23) zur Drehmitnahme des Werkzeugs (16) und die Haltemittel (28) zur axialen Sicherung des Werkzeugs (16) axial hintereinander angeordnet sind.

3. Handwerkzeugmaschine nach Anspruch 1 oder 2, **dadurch gekennzeichnet, daß** die Haltemittel (28) ihrerseits den Mitteln zur Drehmitnahme (23) axial vorgelagert sind.

4. Handwerkzeugmaschine nach Anspruch 3, **dadurch gekennzeichnet, daß** die Mittel zur Drehmitnahme (23) an einer Hülse (26) ausgebildet sind, deren hinterer Abschnitt (26b) auf die Spindel (12) aufgesetzt ist und mit dieser drehfest verbunden ist.

5. Handwerkzeugmaschine nach einem der vorhergehenden Ansprüche, **dadurch gekennzeichnet, daß** die Führungsmittel (18) durch eine in einer drehend antreibbaren Spindel (12) koaxial angeordnete Führungsbohrung (14) gebildet werden.

6. Handwerkzeugmaschine nach einem der vorhergehenden Ansprüche, **dadurch gekennzeichnet, daß** die Haltemittel (28) ein Klemmteil (30) aufweisen, das aus einer etwa senkrecht zur Längsachse (11) des Werkzeughalters (20) liegenden Öffnungsstellung verschwenkbar ist und das eine Öffnung (31) zum Durchtritt des Werkzeugs (16) aufweist, wobei durch Verschwenken des Klemmteils (30) in Richtung zur Längsachse (11) ein wirksamer Querschnitt der Öffnung (31) derart verkleinerbar ist, daß sich Klemmteil (30) und Werkzeug (16) miteinander verklemmen (Figur 1-5).

7. Handwerkzeugmaschine nach Anspruch 6, **dadurch gekennzeichnet, daß** das Klemmteil (30) an einem Federblech (29) ausgebildet ist, dessen eines Ende (29a) am Werkzeughalter (20) befestigt ist und dessen anderes Ende (29b) schräg zur Längsachse (11) abgewinkelt und in Richtung auf seine Klemmstellung federnd vorgespannt ist (Figur 1 u. 2).

8. Handwerkzeugmaschine nach Anspruch 6, **dadurch gekennzeichnet, daß** das Klemmteil (30) durch eine Scheibe (50) gebildet wird, die mit einem an der Hülse (26) ausgebildeten Vorsprung (51) gelenkig verbunden ist und von einer Druckfeder (52) in Richtung auf ihre Klemmstellung beaufschlagt ist (Fig. 4).

9. Handwerkzeugmaschine nach Anspruch 4, **dadurch gekennzeichnet, daß** das Klemmteil (30) als Klemmscheibe (60) ausgebildet ist, die von einer Feder (64) gegen einen zur Längsachse (11) schrägstehenden, elastischen Halteteil (61a) eines axial festgelegten Bügels (61) gedrängt wird (Fig. 5).

10. Handwerkzeugmaschine nach einem der Ansprüche 6 bis 9, **dadurch gekennzeichnet, daß** ein Arretierglied (34) vorgesehen ist, das das Klemmteil (30) zum Einsetzen bzw. Herausnehmen des Werkzeugs (16) in einer Entriegelungsstellung arretiert (Fig. 9 und 10).

11. Handwerkzeugmaschine nach einem der Ansprüche 1 bis 3, **dadurch gekennzeichnet, daß** die Haltemittel (28) durch Gelenkbacken (70, 71) gebildet werden, die gegenüber dem Werkzeughalter (20) an dessen Hülse (26) um Achsen (76, 77) radial zur Längsachse (11) des Werkzeughalters (20) schwenkbar gelagert sind und durch Axialverschiebung einer mit Federkraft (74) vorgespannten Konushülse (75) in Richtung zum Werkzeugschaft (17) radial andrückbar sind. (Fig.6).

12. Handwerkzeugmaschine nach einem der Ansprüche 6 bis 11, **dadurch gekennzeichnet, daß** das Haltemittel (28) mittels eines axial gegen Rückstellkraft verschiebbaren Teils (65) aus seiner Klemmstellung in seine Lösestellung schwenkbar ist.

13. Handwerkzeugmaschine nach Anspruch 12, **dadurch gekennzeichnet, daß** das Teil (65) an einer Betätigungshülse (36) ausgebildet ist, die mit wenigstens einer beweglichen Taste (54) versehen ist, welche mit einer Sperrfläche derart zusammenwirkt, daß die Betätigungshülse (36) erst nach Betätigung der Taste (54) axial verschiebbar ist.

14. Werkzeug für eine Handwerkzeugmaschine insbesondere zum Bohren, Schrauben, Bürsten, Schleifen oder dergleichen, das um eine Längsachse (11) drehend anzutreiben ist und einen Werkzeugschaft (17) aufweist, der sich aus einem Schaftabschnitt (15) zur axialen Führung des Werkzeugs (16), aus einem Drehmitnahmebereich (21) zur Drehmitnahme des Werkzeugs (16) und aus einem Halteabschnitt (24) zur axialen Festlegung des Werkzeugs (16) zusammensetzt, wobei der Führungs-Schaftabschnitt (15) und der Halteabschnitt (24) axial voneinander getrennt angeordnet sind, **dadurch gekennzeichnet, daß** der Halteabschnitt (24) einen größeren Querschnitt als der Führungs-Schaftabschnitt (15) aufweist.

15. Werkzeug nach Anspruch 14, **dadurch gekennzeichnet, daß** der Führungs-Schaftabschnitt (15), der Drehmitnahmebereich (21) und der Halteabschnitt (24) axial voneinander getrennt angeordnet sind.

16. Werkzeug nach Anspruch 15, **dadurch gekennzeichnet, daß** der Führungs-Schaftabschnitt (15) am einsteckseitigen Ende (22) des Werkzeugs (16) liegt, der Halteabschnitt (24) hingegen weiter werkzeugseitig angeordnet ist und der Drehmitnahmebereich (21) axial zwischen dem Führungs-Schaftabschnitt (15) und dem Halteabschnitt (24) angeordnet ist.

17. Werkzeug nach Anspruch 15 oder 16, **dadurch gekennzeichnet, daß** am Drehmitnahmebereich (21) vier am Außenumfang des Werkzeugschafts (17) verteilte Vorsprünge (82) gebildet sind.

18. Werkzeug nach Anspruch 14 oder 16, **dadurch gekennzeichnet, daß** im Halteabschnitt (28) wenigstens eine Vertiefung, beispielsweise eine Ringnut (80), zum Eingriff wenigstens eines Haltevorsprungs (72, 73) am Haltemittel des Werkzeughalters (20) vorgesehen ist (Fig. 6).

19. Werkzeug nach einem der vorhergehenden Ansprüche, **dadurch gekennzeichnet, daß** der Werkzeugschaft (17) im Bereich des Halteabschnitts (28) einen Querschnitt hat, der zumindest teilweise radial über einen Querschnitt des Werkzeugschafts (17) im Drehmitnahmebereich (21) hinaussteht.

20. Werkzeug nach einem der Ansprüche 14 bis 18, **dadurch gekennzeichnet, daß** der Werkzeugschaft (17) als Adapter (84) ausgebildet ist, der mit dem Werkzeug (16) lösbar verbindbar ist.

21. Werkzeug nach einem der Ansprüche 14 bis 20, **dadurch gekennzeichnet, daß** der Halteabschnitt (24) zylindrisch ausgeführt ist.

## Claims

1. Hand-held machine tool, with associated tool (16), in particular for drilling, screwing, brushing, sanding or the like, with a tool holder (20), which has a socket (19) as a guide means (18) for the axial guidance of the tool (16), into which socket a guiding shank section (15) of a tool shank (17) of the tool (16) can be inserted axially, and which is provided with means (23) for the rotary driving of the tool (16) and with holding means (28) for securing the tool (16) axially, the holding means (28) being arranged axially ahead of the guide means (18) and being designed to cooperate with a holding section (24) of the tool shank (17), the said holding section being arranged axially ahead of the guiding shank section (15), **characterized in that** the holding means (28) have a socket region with a larger cross section than the guide means (18).

2. Hand-held machine tool according to Claim 1, **characterized in that** the means (23) for the rotary driving of the tool (16) and the holding means (28) for securing the tool (16) axially are arranged axially one behind the other.

3. Hand-held machine tool according to Claim 1 or 2, **characterized in that** the holding means (28) for their part are arranged axially ahead of the means (23) for rotary driving.

4. The hand-held machine tool according to Claim 3, **characterized in that** the means (23) for rotary driving are formed on a sleeve (26), the rear section (26b) of which is mounted on the spindle (12) and is connected to the latter in a manner which prevents relative rotation.

5. Hand-held machine tool according to one of the preceding claims, **characterized in that** the guide means (18) are formed by a guide hole (14) arranged coaxially in a spindle (12) which can be driven in rotation.

6. Hand-held machine tool according to one of the preceding claims, **characterized in that** the holding means (28) have a jamming part (30) which can be swivelled out of an open position approximately perpendicular to the longitudinal axis (11) of the tool holder (20) and has an opening (31) for the passage of the tool (16), it being possible, by swivelling the jamming part (30) towards the longitudinal axis (11), to reduce the size of an effective cross-section of the opening (31) in such a way that the jamming part (30) and the tool (16) jam together (Figures 1-5).

7. Hand-held machine tool according to Claim 6, **characterized in that** the jamming part (30) is formed on a spring plate (29), one end (29a) of which is attached to the tool holder (20) and the other end (29b) of which is angled obliquely to the longitudinal axis (11) and preloaded resiliently towards its jamming position (Figures 1 and 2).

8. Hand-held machine tool according to Claim 6, **characterized in that** the jamming part (30) is formed by a disc (50) which is connected in a hinged manner to a projection (51) formed on the sleeve (26) and is acted upon by a compression spring (52) towards its jamming position (Fig. 4).

9. Hand-held machine tool according to Claim 4, **characterized in that** the jamming part (30) is designed as a jamming disc (60) which is urged by a spring (64) against a flexible holding part (61a) of an axially fixed hanger (61), the said holding part lying obliquely to the longitudinal axis (11) (Fig. 5).

10. Hand-held machine tool according to one of Claims 6 to 9, **characterized in that** a locking member (34) is provided which locks the jamming part (30) in an unlocked position to allow insertion and removal of the tool (16) (Figs. 9 and 10).

11. Hand-held machine tool according to one of Claims 1 to 3, **characterized in that** the holding means (28) are formed by hinged jaws (70, 71) which are mounted in such a way that they can swivel relative to the tool holder (20), radially with respect to the longitudinal axis (11) of the said tool holder on the sleeve (26) of the latter, about pivots (76, 77) and can be pressed radially towards the tool shank (17) by axial displacement of a taper sleeve (75) preloaded by spring force (74). (Fig. 6).

12. Hand-held machine tool according to one of Claims 6 to 11, **characterized in that** the holding means (28) can be swivelled out of its jamming position into its release position by means of a part (65) which can be displaced axially counter to a restoring source.

13. Hand-held machine tool according to Claim 12, **characterized in that** the part (65) is formed on an actuating sleeve (36) which is provided with at least one moveable push button (54), which interacts with a locking surface in such a way that the actuating sleeve (36) can be displaced axially only after actuation of the push button (54).

14. Tool for a hand-held machine tool, in particular one for drilling, screwing, brushing, sanding or the like, which is to be driven in rotation about a longitudinal axis (11) and has a tool shank (17) which is made up of a shank section (15) for the axial guidance of the tool (16), a rotary-drive region (21) for the rotary driving of the tool (16), and a holding section (24) for the axial fixing of the tool (16), the guiding shank section (15) and the holding section (24) being arranged in such a way as to be axially separated from one another, **characterized in that** the holding section (24) has a larger cross section than the guiding shank section (15).

15. Tool according to Claim 14, **characterized in that** the guiding shank section (15), the rotary-drive region (21) and the holding section (24) are arranged in such a way as to be axially separated from one another.

16. Tool according to Claim 15, **characterized in that** the guiding shank section (15) is situated at the insertion end (22) of the tool (16), whereas the holding section (24) is arranged further towards the tool, and the rotary-drive region (21) is arranged axially between the guiding shank section (15) and the holding section (24).

17. Tool according to claim 15 or 16, **characterized in that** the tool shank (17) has a predominantly cylindrical cross-section in the holding section (24), with a larger diameter than a cross-section in the region of the guiding shank section (15).

18. Tool according to Claim 14 or 16, **characterized in that** at least one depression, for example an annular groove (80), is provided in the holding section (28) to allow engagement of at least one holding projection (72, 73) on the holding means of the tool holder (20) (Fig.6).

19. Tool according to one of the preceding claims, **characterized in that** the tool shank (17) has a cross-section in the region of the holding section (28) which projects at least partially in the radial direction beyond a cross-section of the tool shank (17) in the rotary-drive region (21).

20. Tool according to one of Claims 14 to 18, **characterized in that** the tool shank (17) is designed as an adaptor (84) which can be connected releasibly to the tool (16).

21. Tool according to one of claims 14 to 20, **characterized in that** the holding section (24) is of cylindrical design.

## Revendications

1. Machine-outil manuelle comportant un outil (16), notamment pour percer, visser, brosser, poncer ou opération analogue, un porte-outil (20) ayant un logement (19) comme moyen de guidage (18) pour le guidage axial de l'outil (16), logement recevant axialement un segment de tige de guidage (15) d'une tige (17) de l'outil (16), et muni d'un moyen (23) pour l'entraînement en rotation de l'outil (16) ainsi que d'un moyen de fixation (28) pour bloquer axialement l'outil (16),
le moyen de fixation (28) étant situé axialement devant le moyen de guidage (18) et étant réalisé pour coopérer avec un segment de fixation (24) de la tige (17) de l'outil, segment qui est axialement situé devant le segment de guidage (15),
**caractérisée en ce que**
le moyen de fixation (28) comporte une zone de réception de section plus importante que le moyen de guidage (18).

2. Machine-outil manuelle selon la revendication 1,
**caractérisée en ce que**
le moyen (23) d'entraînement en rotation de l'outil (16) et le moyen de fixation (28) pour fixer axialement l'outil (16) sont placés axialement l'un derrière l'autre.

3. Machine-outil selon l'une quelconque des revendications 1 ou 2,
**caractérisée en ce que**
le moyen de fixation (28) est situé axialement devant le moyen d'entraînement en rotation (23).

4. Machine-outil manuelle selon la revendication 3,
**caractérisée en ce que**
le moyen d'entraînement en rotation (23) est réalisé sur un manchon (26) dont le segment arrière (26b) est monté sur la broche (12) et est relié solidairement en rotation à celle-ci.

5. Machine-outil selon l'une quelconque des revendications précédentes,
**caractérisée en ce que**
le moyen de guidage (18) est formé par un perçage de guidage (14) réalisé axialement dans la broche (12) entraînée en rotation.

6. Machine-outil selon l'une quelconque des revendications précédentes,
**caractérisée en ce que**
le moyen de fixation (28) comporte une pièce de serrage (30) qui peut basculer d'une position d'ouverture sensiblement perpendiculaire à l'axe longitudinal (11) du porte-outil (20), cette pièce ayant une ouverture (31) pour le passage de l'outil (16), et par basculement de la pièce de serrage (30) vers l'axe longitudinal (11), la section active de l'ouverture (31) diminue de façon à produire le serrage de la pièce de serrage (30) et de l'outil (16) (figures 1 à 5).

7. Machine-outil manuelle selon la revendication 6,
**caractérisée en ce que**
la pièce de serrage (30) est formée dans une tôle élastique (29) dont une extrémité (29a) est fixée au porte-outil (20) et l'autre extrémité (29b) recourbée en biais par rapport à l'axe longitudinal (11) est précontrainte élastiquement en direction de sa position de serrage (figures 1 et 2).

8. Machine-outil manuelle selon la revendication 6,
**caractérisée en ce que**
la pièce de serrage (30) est formée par une rondelle (50) reliée de manière articulée à une partie en saillie (51) formée sur le manchon (26) en étant sollicitée par un ressort de compression (52) en direction de sa position de serrage (figure 4).

9. Machine-outil manuelle selon la revendication 6,
**caractérisée en ce que**
la pièce de serrage (30) est une rondelle de serrage (60) poussée par un ressort (64) contre une pièce de retenue élastique (61a) disposée en biais par rapport à l'axe longitudinal (11) et appartenant à un étrier (61) fixé axialement (figure 5).

10. Machine-outil selon l'une quelconque des revendications 6 à 9,
**caractérisée par**
un organe de blocage (34) qui bloque la pièce de serrage (30) pour introduire ou extraire l'outil (16), dans une position de déverrouillage (figures 9 et 10).

11. Machine-outil selon l'une quelconque des revendications 1 à 3,
**caractérisée en ce que**
le moyen de fixation (28) est formé par des mâchoires articulées (70, 71) montées basculantes par rapport au porte-outil (20) sur son manchon (26) autour d'axes (76, 77) dirigés radialement par rapport à l'axe longitudinal (11) du porte-outil (20), et par coulissement axial d'un manchon conique (75) précontraint avec une force de ressort (74) ils peuvent être pressés radialement en direction de la tige d'outil (17) (figure 6).

12. Machine-outil selon l'une quelconque des revendications 6 à 11,
**caractérisée en ce que**
le moyen de fixation (28) se bascule en position de libération à partir de sa position de serrage par une pièce (65) coulissant axialement contre la force de rappel.

13. Machine-outil selon la revendication 12,
**caractérisée en ce que**
la pièce (65) est réalisée sur un manchon d'actionnement (36) muni d'au moins une touche mobile (54) coopérant avec une surface de blocage de façon que le manchon d'actionnement (36) ne puisse coulisser axialement qu'après l'actionnement de la touche (54).

14. Outil pour une machine-outil manuelle, notamment pour percer, visser, brosser, poncer ou opération analogue, entraîné en rotation autour d'un axe longitudinal (11) et ayant une tige d'outil (17) qui comprend un segment de tige (15) pour le guidage axial de l'outil (16), d'une zone d'entraînement en rotation (21) pour l'entraînement en rotation de l'outil (16) et d'un segment de fixation (24) pour bloquer axialement l'outil (16), le segment de guidage (15) et le segment de fixation (24) étant séparés axialement l'un de l'autre,
**caractérisé en ce que**
le segment de fixation (24) a une section plus grande que le segment de guidage (15).

15. Outil selon la revendication 14,
**caractérisé en ce que**
le segment de tige de guidage (15), le segment d'entraînement en rotation (21) et le segment de fixation (24) sont séparés axialement l'un de l'autre.

16. Outil selon la revendication 15,
**caractérisé en ce que**
le segment de tige de guidage (15) se trouve à l'extrémité d'emmanchement (22) de l'outil (16), le segment de fixation (24) se trouve au contraire plus du côté de l'outil et la zone d'entraînement en rotation (21) se trouve axialement entre le segment de tige de guidage (15) et le segment de fixation (24).

17. Outil selon l'une quelconque des revendications 15 ou 16,
**caractérisé en ce que**
la zone d'entraînement en rotation (21) comporte quatre parties en saillie (82) réparties à la périphérie extérieure de la tige d'outil (17).

18. Outil selon l'une quelconque des revendications 14 ou 16,
**caractérisé en ce que**
le segment de fixation (28) comporte au moins une cavité, par exemple une rainure annulaire (80) pour recevoir au moins une partie en saillie de fixation (72, 73) du moyen de fixation du porte-outil (20) (figure 6).

19. Outil selon l'une quelconque des revendications précédentes,
**caractérisé en ce que**
la tige d'outil (17) présente, au niveau du segment de fixation (28), une section qui dépasse au moins partiellement, radialement, par rapport à la section de la tige d'outil (17) dans la zone d'entraînement en rotation (21).

20. Outil selon l'une quelconque des revendications 14 à 18,
**caractérisé en ce que**
la tige d'outil (17) est réalisée comme adaptateur (84) relié de manière amovible à l'outil (16).

21. Outil selon l'une quelconque des revendications 14 à 20,
**caractérisé en ce que**
le segment de fixation (24) est de forme cylindrique.
